# EUROPÄISCHE PATENTSCHRIFT

(11) **EP 0 546 990 B1**
(45) Veröffentlichungstag und Bekanntmachung des Hinweises auf die Patenterteilung: **12.04.1995**
(21) Anmeldenummer: 92810918.0
(22) Anmeldetag: 26.11.1992
(51) Int. Cl.: E01B 9/14, F16B 13/12

(54) **Hülse zur Erhöhung des Haltewertes einer Schraube**
Dowel for increasing the anchoring value of a screw
Cheville pour augmenter la capacité d'ancrage d'une vis

(30) Priorität: 09.12.1991 DE 4140563; 11.09.1992 DE 4230428
(43) Veröffentlichungstag der Anmeldung: 16.06.1993
(73) Patentinhaber: HILTI Aktiengesellschaft, 9494 Schaan (LI)
(72) Erfinder: Leibhard, Erich, W-8000 München 71 (DE); Popp, Franz, W-8938 Buchloe (DE); Ludwig, Wolfgang, D-8930 Schwabmünchen (DE); Schwaninger, Thomas, A-6710 Nenzing (AT)
(74) Vertreter: Wildi, Roland

(56) Entgegenhaltungen:
- DE-A- 1 784 010
- DE-C- 226 526
- FR-A- 426 653
- FR-A- 669 367
- FR-A- 1 129 157

## Beschreibung

Die Erfindung betrifft eine Hülse zur Erhöhung des Haltewertes einer Schraube in einem Bauteil, insbesondere einer Holzschwelle mit einem an der Aussenkontur angeordneten Gewindegang eines Aussengewindes von gleichbleibendem Aussendurchmesser und einer Innenbohrung, die zumindest im Bereich entgegen der Setzrichtung einen Gewindegang eines die Schraube aufnehmenden Innengewindes mit einer dem Gewindegang des Aussengewindes entsprechenden Steigung aufweist.

Eisenbahnschienen wurden in der Vergangenheit und werden auch heute noch häufig auf Holzschwellen verlegt. Der Verbindung der die Schienen tragenden Rippenplatten mit der Holzschwelle dienen an sich bekannte Schrauben, welche ein Gewinde nach Art einer Holzschraube tragen.

Durch Witterungseinflüsse, Alterungsvorgänge im Holz und laufende dynamische Belastungen verringern sich die Haltewerte der Schrauben im Laufe der Zeit. Die Ursache liegt in einem Nachlassen der formschlüssigen Verbindung zwischen dem Aufnahmematerial in Form der Holzschwelle und dem Gewinde der Schraube, wobei der Schwachpunkt insbesondere darin liegt, dass das vom Gewinde der Schraube in die Bohrung der Holzschwelle geschnittene Innengewinde zerstört wird.

Um wiederum ausreichende Haltewerte zur Verfügung stellen zu können, ist eine umfassende Sanierung des die Verbindung gewährleistenden Bereiches unerlässlich. Da die Sanierung des Aufnahmemateriales allenfalls mit einem Austausch der Holzschwelle bewerkstelligt werden könnte, kommt aus rein wirtschaftlichen Gründen lediglich eine Sanierung der Bohrung in Frage. Hierzu sind verschiedene mit jeweils unterschiedlichen Nachteilen behaftete Methoden bekannt, bei denen es immer darum geht, wiederum ein intaktes Gewinde in der Holzschwelle für das Gewinde der Schraube zur Verfügung zu stellen.

Nebst chemischen Sanierungsmethoden, welche aus anwendungstechnischer Sicht sehr problematisch sind, hat sich vor allem der Einsatz von Metallwendeln durchgesetzt. Der Sinn bei Verwendung einer solchen beispielsweise aus der EP-A-0 188 490 bekannten Wendel liegt darin, das in der Bohrung der Holzschwelle vorhandene, nicht mehr funktionsfähige Innengewinde mit der Wendel auszukleiden und der Schraube die Möglichkeit zu geben, zwischen dem Gang der Wendel sich im intakten Aufnahmematerial ein neues Innengewinde zu schneiden. Während sich die Verwendung einer solchen Wendel rein wirtschaftlich von den Materialkosten her negativ auswirkt, liegt ein weiterer gravierender Nachteil in der aufwendigen Setzmethode. Diese Setzmethode erfolgt derart, dass in einem ersten Arbeitsgang die Schraube herausgedreht werden muss, in einem weiteren Arbeitsgang mittels eines separaten Werkzeuges die Wendel in das bestehende Innengewinde der Bohrung einzudrehen ist und erst nach Herausdrehen des Setzwerkzeuges in einem letzten Arbeitsgang die Schraube unter Schneiden eines neuen Innengewindes wieder eingedreht werden kann. Es ist somit für das Eindrehen der Wendel ein separater Arbeitsgang erforderlich, welcher zudem noch ein spezielles Setzwerkzeug voraussetzt.

Aus der DE-A-1 784 010 ist eine - allerdings nicht für die Sanierung vorgesehene - Kunststoffhülse mit einem Aussengewinde bekannt, welche ebenfalls in Betonschwellen eingesetzt wird. Diese Kunststoffhülse wirkt nach Art eines Dübels und stellt dank einer besonderen Ausgestaltung der Aussenkontur im Zusammenwirken mit der Holzschwelle einen ausreichenden Formschluss sicher.

Der Erfindung liegt die Aufgabe zugrunde, ein wirtschaftlich herstell- und anwendbares Sanierungselement auf der Basis einer Kunststoffhülse mit einem Innengewinde und einem Aussengewinde zu schaffen.

Erfindungsgemäss wird die Aufgabe dadurch gelöst, dass sich die Innenbohrung in Setzrichtung verjüngt und der Gewindegang des Innengewindes sowie der Gewindegang des Aussengewindes axial hintereinander angeordnet und zueinander in axialer Richtung um die halbe Gewindesteigung versetzt sind.

Die erfindungsgemäss vorgeschlagene Hülse schafft gegenüber den bekannten Methoden vor allem eine wesentliche Vereinfachung der Setzmethode. Letzere erfolgt derart, dass in einem ersten Arbeitsgang die keine ausreichende Haltewerte mehr bietende Schraube herausgedreht wird. Auf die herausgedrehte Schraube wird die Hülse teilweise aufgesetzt, indem das Gewinde der Schraube in den Gewindegang des Innengewindes der Hülse eingreift. Die damit aus Schraube und Hülse bestehende Einheit wird gemeinsam in die bestehende Bohrung der Holzschwelle eingedreht, was zur Folge hat, dass die Hülse mit ihrem Aussengewinde in das schon bestehende, aber nicht mehr funktionsfähige Innengewinde der Bohrung gelangt. Dieses Eindrehen kann mit einem üblichen Gerät erfolgen, wobei im Gegensatz zu den bekannten Methoden die zur Anwendung gelangende Drehzahl eine untergeordnete Rolle spielt. Bei Auftreten eines ausreichend hohen Drehmomentes im Verlaufe des Eindrehens erfolgt zwischen Hülse und Schraube eine Relativverdrehung, die zur Folge hat, dass sich die Schraube gegenüber der in der Holzschwelle schon festsitzenden Hülse weiterdreht und die Schraube damit in die Holzschwelle hineingetrieben wird.

Die axiale Versetzung von dem Gewindegang des Innengewindes zu dem Gewindegang des Aussengewindes um etwa die halbe Gewindesteigung hat zur Folge, dass die Schraube gegenüber dem Gewindegang des Aussengewindes der Hülse schon zu Beginn des Eindrehvorganges derart positioniert wird, dass das Gewinde der Schraube zwischen dem Gewindegang des Aussengewindes der Hülse zu liegen kommt. Beim Eindrehen der Hülse setzt sich der Gewindegang des Aussengewindes im bestehenden, aber nicht mehr funktionsfähigen Gewinde der Holzschwelle fest. Die Hülsenwandung der Hülse wird von dem Gewinde der Schraube gegen den noch funktionsfähigen Teil des Gewindes in der Holzschwelle gedrückt. Es werden somit wiederum hohe Auszugswerte der Schraube erreicht.

Gegenüber der Sanierungsmethode unter Verwendung einer Wendel kann beim Einsatz der erfindungsgemäss vorgeschlagenen Hülse ein Arbeitsgang eingespart werden, indem das dem Ausfüttern des nicht mehr intakten Innengewindes dienende Element, nämlich die Hülse, zusammen mit der Schraube, dh ohne separaten Arbeitsgang eingedreht wird. Es entstehen damit insbesondere aus der Sicht der Handhabung und der Zeitersparnis wesentliche Vorteile. Ein weiterer Vorteil besteht darin, dass ohne weiteres zwei Hülsen nacheinander innerhalb ein und derselben Bohrung verwendet werden können, sofern ausserordentlich starke Beschädigungen vorliegen sollten.

Die Verwendung von Kunststoff als Material für die Hülse hat ferner den Vorteil, dass eine Kontaktkorrosion vermieden wird.

Zum Zwecke einer Materialeinsparung ist aus wirtschaftlichen Gründen der Gewindegang des Innengewindes von Ausformungen in der Hülsenwand gebildet. Es bietet sich dadurch die Möglichkeit, die Wandstärke der Hülse zumindest bereichsweise gleichbleibend zu belassen, was nebst der Materialeinsparung auch zu spritztechnischen Vorteilen führt.

Vorzugsweise erstreckt sich das Innengewinde entlang der gesamten Innenbohrung. Aus anwendungstechnischer Sicht entsteht bei einer Hülse mit einem solch durchgehenden Innengewinde beim Eindrehen einer Schraube ein nur geringer, praktisch vernachlässigbarer Reibungswiderstand.

Zweckmässigerweise verjüngt sich der Kerndurchmesser des Aussengewindes in Setzrichtung konisch. Da der Gewindegang des Aussendurchmessers quasi als Ausfütterung für das nicht mehr funktionsfähige Innengewinde der Bohrung dient, ist hier das Vorsehen einer ausreichenden Materialmenge unerlässlich. Aus diesem Grund ist der Gewindegang des Aussendurchmessers vorzugsweise als Vollprofil an der Hülsenwandung angeformt.

Die in Setzrichtung konische Verjüngung des Kerndurchmessers hat zur Folge, dass relativ gesehen, die radial gemessene Gewindehöhe zum setzrichtungsseitigen Ende hin zunimmt, weil der Aussendurchmesser des Aussengewindes gleichbleibend ist, so dass für die Ausfütterung mit zunehmender Tiefe entsprechend mehr Material zur Verfügung steht.

Durch ein Innengewinde, dessen Aussendurchmesser sich vorteilhafterweise in Setzrichtung konisch verjüngt, nimmt die Wandungsstärke zwischen dem Aussendurchmesser des Innengewindes und dem Kerndurchmesser des Aussengewindes zu. Beim Eindrehen der Schraube entsteht somit mit zunehmender Eindrehtiefe ein sich vergrössernder radialer Spreizdruck.

Zweckmässigerweise verjüngt sich der Aussendurchmesser des Innengewindes entsprechend dem Kerndurchmesser des Aussengewindes konisch. Durch eine derartige Ausbildung des Aussen- und Innengewindes wird eine, sich im wesentlichen über die gesamte Länge der Hülse erstreckende, gleichbleibende Wandungsstärke erreicht.

Vorzugsweise schliesst sich in Setzrichtung an die verjüngte Innenbohrung eine zylindrische Innenbohrung an. Durch die zylindrische Innenbohrung wird eine im wesentlichen gleichbleibende Materialanhäufung im setzrichtungsseitigen Bereich der Hülse gewährleistet.

Zweckmässigerweise ist im Bereich der zylindrischen Innenbohrung der Aussendurchmesser des Innengewindes und der Kerndurchmesser des Aussengewindes zylindrisch. Eine derartige Ausbildung des zylindrischen Bereiches ergibt eine gleichbleibende Wandungsstärke zwischen dem Kerndurchmesser des Aussengewindes und dem Aussendurchmesser des Innengewindes sowie eine gleichbleibende Gewindehöhe.

Vorteilhafterweise weist die Wandung der Hülse wenigstens eine sich zumindest entlang eines Teiles ihrer Länge erstreckende, im wesentlichen axial verlaufende Querschnittsschwächung auf Mit einer derartigen Querschnittsschwächung ist es möglich, die Hülse an wenigstens einer Stelle, beim Eindrehen der Schraube aufzureissen, so dass sie sich ohne weiteren Widerstand radial aufweiten lässt. Die Hülse ist dadurch in radialer Richtung leichter verformbar.

Zweckmässigerweise ist die Querschnittsschwächung von axial hintereinander angeordneten, die Wandung der Hülse durchsetzenden Langlöchern und Bohrungen gebildet. Der in axialer Richtung zwischen den Langlöchern und Bohrungen befindliche Teil der Hülsenwandung ist derart gering gehalten, dass einerseits das Eindrehen der Hülse mittels der Schraube gewährleistet bleibt, andererseits beim vollständigen Eindrehen der Schraube in die Hülse ein Aufreissen dieser restlichen Hülsenwandung erfolgt. Die Langlöcher können sich jeweils in axialer Richtung verengen. Durch diese Verengungen entstehen Bereiche, die beim Auftreten einer hohen radialen Spannung an der Hülsenwandung zu einem gezielten Aufreissen der restlichen Hülsenwandung führen. Durch die Anordnung mehrerer abwechslungsweise axial hintereinander angeordneter Langlöcher und Bohrungen am Umfang der Hülse wird die Hülse beim Eindrehen der Schraube wenigstens im setzrichtungsseitigen Bereich in einzelne Segmente aufgerissen.

Vorzugsweise weist die Hülse Langlöcher auf, die zumindest entlang des axial zwischen zwei benachbarten Gewindeflanken eingeschlossenen Bereiches vorgesehen sind. Da das Aussengewinde gegenüber dem Innengewinde um die halbe Steigung versetzt angeordnet ist, ergibt sich zwangsläufig eine grössere Querschnittsfläche in jenem Bereich, in dem jeweils zwei benachbarte Gewindeflanken des Aussengewindes gegenüber zwei benachbarten Gewindeflanken des Innengewindes angeordnet sind. Da speziell dieser Bereich grössere, in radialer Richtung wirkende Kräfte, zum Aufreissen der Hülse in einzelne Segmente benötigt, sind die Langlöcher mit Vorteil in diesem Bereich angeordnet.

Zweckmässigerweise schliesst sich an den im Bereich entgegen der Setzrichtung angeordneten Gewindegang des Innengewindes in Setzrichtung eine Sperre an, die nach Auftreten eines vorbestimmten Drehmomentes von der Schraube überwindbar ist. Damit die Hülse mit Hilfe der Schraube in die Bohrung in der Holzschwelle eingedreht werden kann, ist das der Setzrichtung abgewandte Ende der Hülse von einem umlaufenden Halsteil mit einem dem grössten Durchmesser des Innengewindeganges entsprechenden Innendurchmesser gebildet. Das Halsteil bildet somit einen Führungsbereich, so dass in jedem Falle die aus Hülse und Schraube bestehende Einheit einfach zusammengesetzt werden kann, ohne dass auf mühsame Weise der Anfang des Gewindeganges des Innengewindes gesucht werden muss. Es besteht somit auch die Möglichkeit, dass Bedienungspersonen, welche beispielsweise bei grosser Kälte mit Handschuhen arbeiten, Hülse und Schraube in einfacher Weise zu einer Einheit zusammensetzen können.

Mit Hilfe der genannten, insbesondere zwischen dem sogenannten Halsteil und dem Gewindegang des Innendurchmessers angeordneten Sperre ist es möglich, ein Drehmoment über die Schraube auf die Hülse zu übertragen. Die Sperre kann auf verschiedene Art und Weise ausgebildet sein. Es können verschiedene, radial ins Innere der Hülse, von der Innenwandung der Hülse abstehende, den Innenquerschnitt der Hülse verkleinernde Vorsprünge vorgesehen sein. Eine weitere Möglichkeit besteht darin, dass sich der Gewindegang des Innengewindes über einen Bereich von etwa zwei Gängen erstreckt und sich an diesen Gewindegang eine glatte Innenbohrung anschliesst.

Sollte aufgrund eines zu hohen Reibwertes zwischen Hülse und Schwelle die Hülse derart unzureichend in die Schwelle eingedreht werden, dass die Schwelle von einem Teil der Hülse noch überragt wird, ist dies nicht nachteilig, da die Hülsenwandung von der Rippenplatte oder vom Kopf der Schraube sich leicht und nicht störend verformen lässt oder wegbricht.

Zweckmässigerweise ist die Sperre als sich konisch verjüngender Bereich des Innengewindes ausgebildet. Speziell bei Hülsen, die ein durchgehendes Innengewinde aufweisen, kann die Sperre in dem entgegen der Setzrichtung angeordneten Bereich in Form einer konischen Verjüngung ausgebildet sein. Die Hülse ist somit mit einer Schraube in Verbindung bringbar, so dass die Hülse zusammen mit der Schraube eine Einheit bildet.

Das Gewindeprofil der Hülse ist nach Art eines Spitzgewindes ausgebildet. Dadurch lässt sich die Hülse mit einem relativ geringen Drehmoment in die Bohrung der Schwelle eindrehen. Aufgrund dieses geringen Drehmomentes ist sichergestellt, dass die Hülse durch das an der Schraube angelegte Drehmoment möglichst tief in die Schwelle hineingedreht wird. Darüber hinaus schafft ein derartig ausgebildetes Gewindeprofil eine ausreichende Ausfütterung des nicht mehr funktionsfähigen Innengewindes der Bohrung in der Holzschwelle, nachdem auch die zur Verwendung gelangenden Schrauben in etwa eine derartige Profilform aufweisen.

Die Erfindung wird nachstehend anhand von Zeichnungen, welche Ausführungsbeispiele darstellen, näher erläutert. Es zeigen:
- Fig. 1: eine erfindungsgemässe Hülse im Längsschnitt;
- Fig. 2: die Hülse der Fig. 1, verbunden mit der Schraube, vor Beginn des Eindrehens in eine Bohrung;
- Fig. 3: die Hülse der Fig. 1, nach Abschluss des Eindrehens der Schraube in die Bohrung;
- Fig. 4: eine weitere Hülse gemäss Erfindung mit einem durchgehenden Innengewinde im Längsschnitt;
- Fig. 5: ein vergrösserter Ausschnitt der Hülse gemäss Fig. 4.

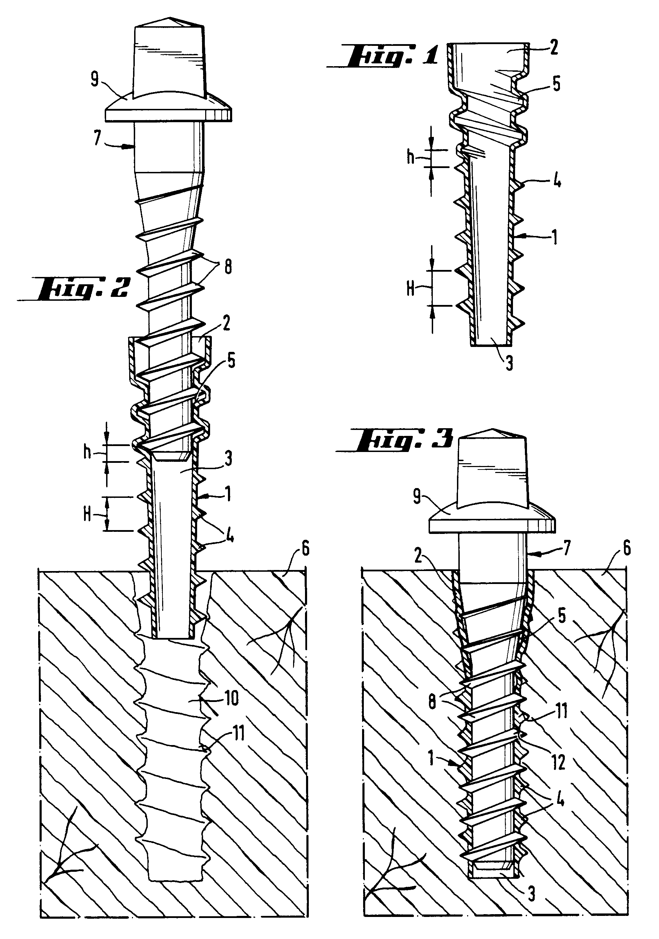

Fig. 1 zeigt die Hülse 1 im Längsschnitt mit sich verjüngender Innenbohrung 3. An der Aussenkontur weist die Hülse 1 einen Gewindegang eines Aussengewindes 4 auf, dessen Aussendurchmesser gleichbleibend ist. Das Profil dieses Aussengewindes 4 ist nach Art eines Spitzgewindes ausgebildet. In dem entgegen der Setzrichtung liegenden Bereich der Hülse 1 ist die Innenbohrung 3 mit einem Gewindegang eines Innengewindes 5 versehen. Dieses Innengewinde 5 erstreckt sich über einen Bereich von etwa zwei Umgängen und weist eine dem Aussengewinde 4 analoge Steigung auf. Dagegen bildet das Innengewinde 5 gegenüber dem Aussengewinde 4 keine Fortsetzung, sondern es liegt in axialer Richtung zwischen Gewindegang des Innengewindes 5 und Gewindegang des Aussengewindes 4 eine Versetzung um die halbe Gewindesteigung h vor. Die gesamte Gewindesteigung, beispielsweise des Aussengewindeganges 4, ist mit H bezeichnet.

Wie die Fig. 1 ferner zeigt, ist das Innengewinde 5 von Ausformungen in der Hülsenwandung gebildet, so dass sich auch in diesem Bereich an der Aussenkontur quasi ein Gewinde abzeichnet, das für die Funktion aber bedeutungslos ist. Dagegen mündet das Innengewinde 5 zu dem der Setzrichtung abgewandten Ende hin in ein umlaufendes Halsteil 2, dessen Innendurchmesser dem grössten Durchmesser des Innengewindes 5 entspricht.

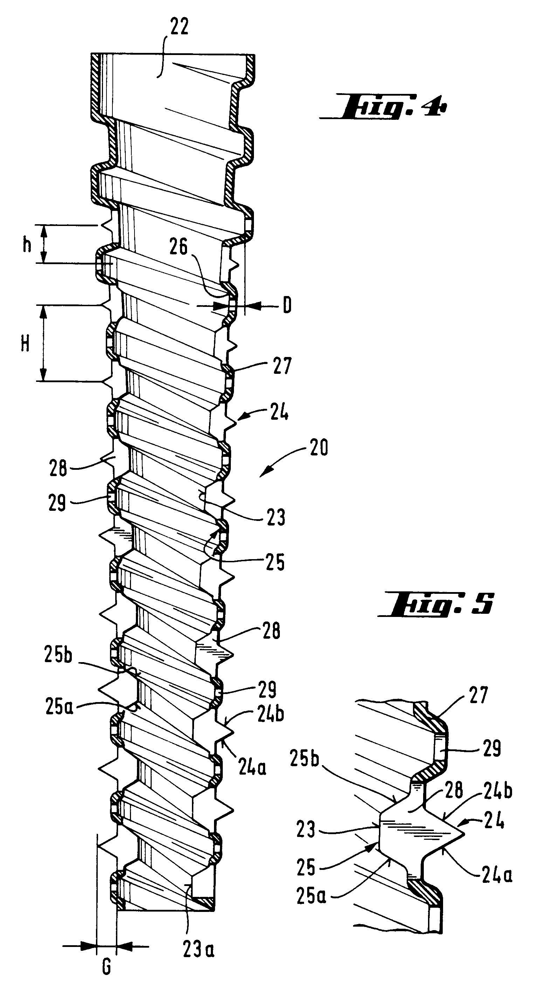

Aus den Fig. 2 und 3 ist zusätzlich zur Hülse 1 eine Schraube 7 und eine Holzschwelle 6 ersichtlich. Die Schraube 7 ist mit einem Gewinde 8 und einem Kopf 9 versehen.

Gemäss Fig. 2 sind die Hülse 1 und die Schraube 7 zu einer Einheit zusammengesetzt, indem das Gewinde 8 der Schraube 7 in das Innengewinde 5 der Hülse 1 eingreift. In dieser Stellung kann die Einheit von einem an sich bekannten Gerät in die Holzschwelle 6 eingedreht werden.

Wie die Fig. 2 ferner zeigt, weist die Holzschwelle 6 eine Bohrung 10 auf, innerhalb welcher sich ein schon bestehendes Innengewinde 11 befindet. Dieses Innengewinde 11 ist ursprünglich von der Schraube 7 geschnitten worden.

Das Eindrehen der aus Hülse 1 und Schraube 7 bestehenden Einheit hat damit zur Folge, dass das Aussengewinde 4 sich das Innengewinde 11 sucht, so dass schlussendlich das Innengewinde 11 vom Aussengewinde 4 ausgefüttert wird, wie dies die Fig. 3 zeigt. Nach ausreichendem Eintreiben der Hülse 1 in die Bohrung 11, dh wenn der Reibwert zwischen Hülse 1 und Wandung der Bohrung 11 eine bestimmte Grösse erreicht hat, erfolgt eine Relativverdrehung zwischen Schraube 7 und Hülse 1, so dass sich die Schraube 7 in die Hülse 1 hineindreht. Vor dem Eindrehen der Schraube 7 in die Hülse 1 wurde das Gewinde 8 durch das Innengewinde 5 derart vorpositioniert, dass das Gewinde 8 der Schraube 7 zwischen dem Gewindegang des Aussengewindes 4 der Hülse 1 zu liegen kommt. Dies hat zur Folge, dass bei dieser beispielhaft gewählten Ausgestaltung der Hülse 1 im Verlaufe des Eindrehens der Schraube 7 die Hülse 1 zwischen dem Gewindegang des Aussengewindes 4 aufgeschnitten wird, so dass das Gewinde 8 der Schraube 7 sich in der Bohrung 10 ein neues Gewinde 12 schneiden kann, wie dies aus der Fig. 3 hervorgeht.

Fig. 4 zeigt eine weitere Hülse 20 im Längsschnitt mit sich verjüngender Innenbohrung 23, wobei an der Innenbohrung 23 ein Innengewinde 25 angeordnet ist. An der Aussenkontur weist die Hülse 20 ein Aussengewinde 24 auf, dessen Aussendurchmesser gleichbleibend ist. Der Kerndurchmesser des Aussengewindes 24 verjüngt sich in Setzrichtung im wesentlichen konisch. Das Profil des Aussengewindes 24 ist nach Art eines Spitzgewindes ausgebildet. In dem entgegen der Setzrichtung liegenden Bereich 22 der Hülse 20 ist die Innenbohrung 23 mit einer Sperre 26 versehen. Die Sperre 26 wird von einem Durchmessersprung D zweier unterschiedlicher Aussendurchmesser des Innengewindes 25 gebildet. Diese Sperre 26 dient der Aufnahme einer nicht dargestellten Schraube, über die ein Drehmoment auf die Hülse 20 übertragen werden kann. Nachdem die Hülse 20 vollständig in das ursprüngliche Gewinde einer nicht dargestellten Holzschwelle eingedreht ist, erfolgt ein Anstieg des Drehmomentes, so dass die Sperre 26 von der Schraube überwunden wird und ein weiteres Eindrehen der Schraube in die Hülse 20 stattfinden kann.

Das Innengewinde 25 weist eine analoge Gewindesteigung H auf, wie das Aussengewinde 24. Der Gewindegang des Innengewindes 25 ist gegenüber dem Gewindegang des Aussengewindes 24 um die halbe Gewindesteigung h versetzt angeordnet. Die gesamte Gewindesteigung, beispielsweise des Aussengewindes 24 ist mit H bezeichnet.

Wie die Fig. 4 ferner zeigt, ist das Innengewinde 25 von Ausformungen in der Hülsenwandung 27 gebildet, so dass sich auch in diesem Bereich an der Aussenkontur der Hülsenwandung 27 eine Art Aussengewinde abzeichnet, das für die Funktion aber bedeutungslos ist.

Die Hülse 20 ist im setzrichtungsseitigen Bereich mit einer zylindrischen Innenbohrung 23a ausgebildet. Neben der zylindrischen Innenbohrung 23a verlaufen auch das Innengewinde 25 mit dem entsprechenden Kerndurchmesser sowie das Aussengewinde 24 mit dem entsprechenden Kerndurchmesser zylindrisch. Eine derartige Ausbildung der Hülse 20 ergibt eine gleichbleibende Wandungsstärke und eine gleichbleibende Hülsenwandung 27 im setzrichtungsseitigen Bereich. Es wird dadurch ein Verankerungsbereich geschaffen, der über eine gewisse axiale Länge die gleiche radiale Verspannung beim Eindrehen einer nicht dargestellten Schraube erfährt.

Wie die Fig 4 und Fig. 5 zeigen, weist die Hülse 20 Durchbrüche auf, die im wesentlichen in radialer Richtung verlaufen und als Bohrungen 29 bzw. Langlöcher 28 ausgebildet sind. Die Bohrungen 29 und die Langlöcher 28 sind speziell im wesentlichen im Bereich der Flanken 25a, 25b des Innengewindes 25 und im Bereich der Flanken 24a, 24b des Aussengewindes 24 angeordnet und gewährleisten ein Aufreissen der Hülse 20 in einzelne, nicht dargestellte Segmente. Die Langlöcher 28 verengen sich jeweils auf beiden Seiten in axialer Richtung. Auf diese Weise entstehen Soll-Bruchstellen, die beim Eindrehen der Schraube zum Aufreissen der restlichen Hülsenwandung 27 zwischen den Langlöchern 28 und den Bohrungen 29 führen.

Die Langlöcher 28 und Bohrungen 29 sind abwechslungsweise hintereinander angeordnet. Durch die Anordnung von mehreren am Umfang der Hülse 20 verteilten, axial hintereinander angeordneten Durchbrüchen kann die Segmentanzahl bestimmt werden, in welche die Hülse 20 wenigstens teilweise aufreissen soll, wenn die Schraube in die Hülse 20 eingedreht wird.

Der Aussendurchmesser des Innengewindes 25 verjüngt sich entsprechend dem Kerndurchmesser des Aussengewindes 24 in Setzrichtung konisch. Auf diese Weise wird eine Zunahme der Gewindehöhe G in Setzrichtung erzielt.

## Patentansprüche

1. Hülse (1,20) zur Erhöhung des Haltewertes einer Schraube (7) in einem Bauteil, insbesondere einer Holzschwelle (6), mit einem an der Aussenkontur angeordneten Gewindegang eines Aussengewindes (4, 24) von gleichbleibendem Aussendurchmesser und einer Innenbohrung (3, 23), die zumindest im Bereich entgegen der Setzrichtung einen Gewindegang eines die Schraube aufnehmenden Innengewindes (5, 25) mit einer dem Gewindegang des Aussengewindes (4, 24) entsprechenden Steigung (H) aufweist, **dadurch gekennzeichnet**, dass sich die Innenbohrung (3, 23) in Setzrichtung verjüngt und der Gewindegang des Innengewindes (5, 25) sowie der Gewindegang des Aussengewindes (4, 24) axial hintereinander angeordnet und zueinander in axialer Richtung um die halbe Gewindesteigung (h) versetzt sind.

2. Hülse nach Anspruch 1, dadurch gekennzeichnet, dass sich das Innengewinde (25) entlang der gesamten Innenbohrung (23) erstreckt.

3. Hülse nach Anspruch 1 oder 2, dadurch gekennzeichnet, dass sich der Kerndurchmesser des Aussengewindes (4, 24) in Setzrichtung konisch verjüngt.

4. Hülse nach einem der Ansprüche 1 bis 3, dadurch gekennzeichnet, dass sich der Aussendurchmesser des Innengewindes (5, 25) in Setzrichtung konisch verjüngt.

5. Hülse nach Anspruch 4, dadurch gekennzeichnet, dass sich der Aussendurchmesser des Innengewindes (5, 25) entsprechend dem Kerndurchmesser des Aussengewindes (4, 24) konisch verjüngt.

6. Hülse nach Anspruch 1 oder 2, dadurch gekennzeichnet, dass sich in Setzrichtung an die verjüngte Innenbohrung (23) eine zylindrische Innenbohrung (23a) anschliesst.

7. Hülse nach Anspruch 6, dadurch gekennzeichnet, dass im Bereich der zylindrischen Innenbohrung (23a) der Aussendurchmesser des Innengewindes (25) und der Kerndurchmesser des Aussengewindes (24) zylindrisch ist.

8. Hülse nach einem der Ansprüche 1 bis 7, dadurch gekennzeichnet, dass die Hülsenwandung (27) wenigstens eine, sich zumindest entlang eines Teiles ihrer Länge erstreckende, im wesentlichen axial verlaufende Querschnittsschwächung aufweist.

9. Hülse nach Anspruch 8, dadurch gekennzeichnet, dass die Querschnittsschwächung von axial hintereinander angeordneten, die Hülsenwandung (27) durchsetzenden Langlöchern (28) und Bohrungen (29) gebildet ist.

10. Hülse nach Anspruch 9, dadurch gekennzeichnet, dass die Langlöcher (28) zumindest entlang des axial zwischen zwei benachbarten Gewindeflanken (25a, 25b, 24a, 24b) eingeschlossenen Bereiches vorgesehen sind.

11. Hülse nach einem der Ansprüche 1 bis 10, dadurch gekennzeichnet, dass sich an den im Bereich entgegen der Setzrichtung angeordneten Gewindegang des Innengewindes (25) in Setzrichtung eine Sperre (26) anschliesst, die nach Auftreten eines vorbestimmten Drehmomentes von der Schraube überwindbar ist.

12. Hülse nach Anspruch 11, dadurch gekennzeichnet, dass die Sperre (26) als sich konisch verjüngender Bereich des Innengewindes (25) ausgebildet ist.

## Claims

1. A sleeve (1, 20) for increasing the holding strength of a screw (7) in an assembly component, in particular a wooden sleeper (6), comprising a thread structure of an external thread (4, 24) of unchanging outside diameter and arranged on the outside contour, and an inside bore (3, 23) comprising, at least in the area opposite the setting direction, a thread structure of an inside thread (5, 25) which accommodates the screw with an incline (H) which corresponds with the thread structure of the outside thread (4, 24), **characterized in that** the inside bore (3, 23) narrows in the setting direction, and the thread structure of the inside thread (5, 25) as well as the thread structure of the outside thread (4, 24) are arranged axially behind one another and offset relative to each other in the axial direction by half a thread incline (h).

2. A sleeve according to claim 1, **characterized in that** the inside thread (25) extends along the entire inside bore (23).

3. A sleeve according to claim 1 or 2, **characterized in that** the core diameter of the outside thread (4, 24) narrows conically in the setting direction.

4. A sleeve according to one of claims 1 to 3, **characterized in that** the outside diameter of the inner thread (5, 25) narrows conically in the setting direction.

5. A sleeve according to claim 4, **characterized in that** the outside diameter of the inside thread (5, 25) narrows conically according to the core diameter of the outside thread (4, 24).

6. A sleeve according to claim 1 or 2, **characterized in that** a cylindrical inside bore (23a) is adjacent the narrowed inside bore (23), as seen in the setting direction.

7. A sleeve according to claim 6, **characterized in that** the outside diameter of the inside thread and the core diameter of the outside thread (24) is cylindrical in the area of the cylindrical inside bore (23a).

8. A sleeve according to one of claims 1 to 7, **characterized in that** the sleeve wall (27) comprises at least one essentially axially extending cross-sectional weakening, which extends at least along a portion of its length.

9. A sleeve according to claim 8, **characterized in that** the cross-sectional weakening is formed by elongated holes (28) and bores (29), which are arranged axially behind each other and extend through the sleeve wall (27).

10. A sleeve according to claim 9, **characterized in that** the elongated holes (28) are provided at least along the area which is enclosed axially between two adjacent thread flanks (25a, 25b, 24a, 24b).

11. A sleeve according to one of claims 1 to 10, **characterized in that** the thread structure of the inside thread (25), which is arranged in the area opposite the setting direction, is adjacent in the setting direction to a lock (26) which is overcome by the screw on offering a specified torque.

12. A sleeve according to claim 11, **characterized in that** that the lock (26) is designed as a conically narrowing area of the inside thread (25).

## Revendications

1. Cheville (1, 20) pour augmenter la valeur d'ancrage d'une vis (7) dans un élément de construction, en particulier une traverse en bois (6), présentant sur le contour extérieur un filet d'un filetage extérieur (4, 24) d'un diamètre extérieur constant, et un alésage (3, 23) qui présente, au moins dans la section opposée à la direction de pose, un filet d'un filetage intérieur (5, 25) lequel reçoit la vis et dont le pas (H) correspond au filet du filetage extérieur (4, 24), caractérisée en ce que l'alésage (3, 23) se rétrécit dans la direction de pose et que le filet du filetage intérieur (5, 25) ainsi que le filet du filetage extérieur (4, 24) sont disposés axialement l'un derrière l'autre et décalés l'un par rapport à l'autre dans le sens axial de la moitié du pas de vis (h).

2. Cheville selon la revendication 1, caractérisée en ce que le filetage intérieur (25) s'étend le long de la totalité de l'alésage (23).

3. Cheville selon l'une des revendications 1 ou 2, caractérisée en ce que le diamètre du noyau du filetage extérieur (4, 24) se rétrécit de manière conique dans la direction de pose.

4. Cheville selon l'une des revendications 1 à 3, caractérisée en ce que le diamètre extérieur du filetage intérieur (5, 25) se rétrécit de manière conique dans la direction de pose.

5. Cheville selon la revendication 4, caractérisée en ce que le diamètre extérieur du filetage intérieur (5, 25) se rétrécit de manière conique, conformément au diamètre du noyau du filetage extérieur (4, 24).

6. Cheville selon l'une des revendications 1 ou 2, caractérisée en ce que, dans la direction de pose, un alésage cylindrique (23a) fait suite à l'alésage rétréci (23).

7. Cheville selon la revendication 6, caractérisée en ce que dans la région de l'alésage cylindrique (23a), le diamètre extérieur du filetage intérieur (25) et le diamètre du noyau du filetage extérieur (24) sont de forme cylindrique.

8. Cheville selon l'une des revendications 1 à 7, caractérisée en ce que la paroi (27) de la cheville présente au moins une diminution de la section transversale qui s'étend sensiblement axialement le long d'au moins une partie de sa longueur.

9. Cheville selon la revendication 8, caractérisée en ce que la diminution de la section transversale est constituée par des trous oblongs (28) et des alésages (29) disposés les uns derrière les autres et traversant la paroi (27) de la cheville.

10. Cheville selon la revendication 9, caractérisée en ce que les trous oblongs (28) sont prévus au moins le long de la zone enfermée axialement entre deux flancs de filet voisins (25a, 25b, 24a, 24b).

11. Cheville selon l'une des revendications 1 à 10, caractérisée en ce que le filet du filetage intérieur (25) disposé dans la section opposée à la direction de pose est suivi, dans la direction de pose, d'un arrêt (26) qui peut être franchi par la vis après l'application d'un couple de rotation prédéterminé.

12. Cheville selon la revendication 11, caractérisée en ce que l'arrêt (26) est réalisé sous la forme d'une section du filetage intérieur (25) qui se rétrécit de manière conique.
